# EUROPEAN PATENT SPECIFICATION

(11) **EP 2 207 399 B1**
(45) Date of publication and mention of the grant of the patent: **20.03.2013**
(21) Application number: 08851954.1
(22) Date of filing: 09.10.2008
(51) Int. Cl.: H04W 40/34

(54) **A METHOD, SYSTEM AND DEVICE FOR PROCESSING THE SERVICE IN THE CIRCUIT SWITCHING DOMAIN**
VERFAHREN, SYSTEM UND GERÄT ZUM BEARBEITEN DES DIENSTES IN DER LEITUNGSVERMITTELDEN ANRICHTUNG
PROCÉDÉ, SYSTÈME ET DISPOSITIF POUR TRAITER LE SERVICE D'UN DOMAINE À COMMUTATION DE CIRCUITS

(30) Priority: 09.11.2007 CN 200710188205
(43) Date of publication of application: 14.07.2010
(73) Proprietor: Huawei Technologies Co., Ltd., Longgang District, Shenzhen Guangdong 518129 (CN)
(72) Inventor: YAO, Jianzhong, Shenzhen Guangdong 518129 (CN)
(74) Representative: Körber, Martin Hans
(86) International application number: PCT/CN2008/072632
(87) International publication number: WO 2009/065321

(56) References cited:
- EP-A2- 1 484 932
- WO-A1-01/56315
- WO-A1-2006/126923
- WO-A1-2007/069229
- WO-A1-2008/133558
- WO-A2-95/24789
- CN-A- 1 143 442
- CN-A- 1 388 711
- JP-A- 59 090 486
- 3GPP: "3rd Generation Partnership Project; Technical Specification Group Radio Access Network; UTRAN Iub interface Node B Application Part (NBAP) signalling (Release 7)", 3GPP TS 25.433 V7.5.0 (2007-06), 1 June 2007 (2007-06-01), page 1, 71, XP002630069,
- NOKIA SIEMENS NETWORKS: "Local switching with an IP-based A interface", 3GPP DRAFT; GP-071810 - AOIP LOCAL SWITCHING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG GERAN, no. Vancouver; 20071107, 7 November 2007 (2007-11-07), XP050019150, [retrieved on 2007-11-07]

## Description

### FIELD OF THE TECHNOLOGY

The present invention relates to the field of mobile communication technologies, and more particularly to a method, system and device for processing Circuit Switched (CS) domain service.

### BACKGROUND OF THE INVENTION

The existing 3^{rd} Generation Partnership Project (3GPP) protocol specifies that all service flows in a data plane of a Circuit Switched (CS) domain need to be switched through a Media Gateway (MGW).

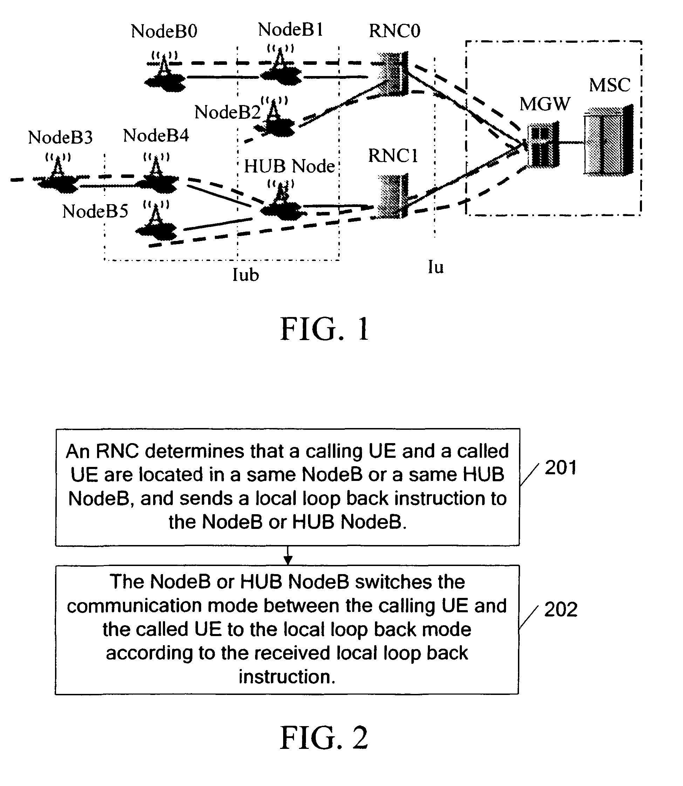

FIG. 1 is a schematic view of service flows in a data plane of a CS domain in the prior art. The network system includes a Mobile Switching Center (MSC) and an MGW located in a core network (CN), base station controllers (e.g. Radio Network Controllers, RNCs), and a plurality of base stations (e.g. NodeBs). Generally, NodeB0, NodeB1, NodeB2, NodeB3, NodeB4, and NodeB5 are base stations that directly communicate with a User Equipment (UE), and an aggregation base station (HUB NodeB) is a base station used for aggregating the transmission of lower-level cascaded NodeBs. As shown in FIG. 1, solid lines represent physical connections, and dashed lines represent service flows in the data plane. As can be seen from FIG. 1, all service flows in the data plane that are processed by the NodeBs need to be switched through the MGW.

In the prior art, the RNCs exchange data with the devices in the CN through an lu interface, and exchange data with the NodeBs through an lub interface.

The prior art has at least the following problems. After the data processing manner shown in FIG. 1 is adopted, since the MSC needs to process CS data services of all subordinate RNCs, and each RNC needs to process CS data services of all subordinate NodeBs, the transmission bandwidth requirements for the lub and lu interfaces are increased. In addition, since the service flows need to be transmitted through a plurality of devices, the transmission delay of the service flows is increased.

WO 2007/069229 **discloses the set up of calls between subscribers on the same base transceiver station by means of a proxy connected to the base transceiver station and controlled by a base station controller.**

WO 2006/126923 A I relates to a telecommunication system, to a radio base station and to a radio network controller for set-up, release and control of local calls in the telecommunication system. The telecommunication system comprises a core network and at least a radio access network, an MSC server, a central media gateway having a point of interconnection to the public switched telecommunication network and at least a radio access gateway to each respective radio access network. At least a local MGW provided with switch means and geographically separated from the central MGW. The radio access gateway and the MSC server are provided with control logic for set-up and release of local calls in the respective radio access networks using the local MGW as switch. The local MGW is located in each radio access gateway of in base stations or in a RBS aggregation site, thereby reducing costs and trombone effects.

### SUMMARY OF THE INVENTION

The present invention is directed to a method, system and device for processing CS domain service, which can lower the requirements for bandwidth and shorten the transmission delay of service flows.

The technical solutions of the present invention are implemented as follows.

According to one aspect of the present invention, a method for processing CS domain service is provided, which includes:
receiving a local loop back instruction sent by a base station controller after the base station controller determines that a calling UE and a called UE are served by a same base station or in a same aggregation base station;
switching the communication mode between the calling UE and the called UE to the local loop back mode according to the local loop back instruction;
wherein the switching the communication mode between the calling UE and the called UE to the local loop back mode according to the local loop back instruction comprises:
   establishing, by the base station or the aggregation base station, an internal transmission channel of the called UE in the base station or the aggregation base station;
   removing, by the base station or the aggregation base station, a calling CS channel in a calling UE channel established with the base station controller, and establishing an internal transmission channel of the calling UE in the base station or aggregation base station, wherein the calling CS channel in the calling UE channel is established after the calling UE initiates a CS call and removed according to the local loop back instruction; and
   establishing, by the base station or aggregation base station, a switching relation between the internal transmission channel of the called UE and the internal transmission channel of the calling UE to enable the calling UE and the called UE to communicate in the local loop back mode.

According to another aspect of the present invention, a method for processing CS domain service is provided, which includes:
determining, by a base station controller, that a calling user equipment, UE, and a called UE are served by a same base station or a same aggregation base station; and
sending, by the base station controller, a local loop back instruction to the base station or aggregation base station, for switching the communication mode between the calling UE and the called UE to the local loop back mode;
wherein the for switching the communication mode between the calling UE and the called UE to the local loop back mode comprises:
   for establishing, by the base station or the aggregation base station, an internal transmission channel of the called UE in the base station or the aggregation base station;
   for removing, by the base station or the aggregation base station, a calling CS channel in a calling UE channel established with the base station controller, and establishing an internal transmission channel of the calling UE in the base station or aggregation base station, wherein the calling CS channel in the calling UE channel is established after the calling UE initiates a CS call and removed according to the local loop back instruction; and
   for establishing, by the base station or aggregation base station, a switching relation between the internal transmission channel of the called UE and the internal transmission channel of the calling UE to enable the calling UE and the called UE to communicate in the local loop back mode.

According to another aspect of the present invention, a device for processing CS domain service is provided, which includes: a receiving unit and a switching unit, where
the receiving unit is configured to receive a local loop back instruction from a base station controller; and
the switching unit is configured to switch the communication mode between a calling UE and a called UE to the local loop back mode according to the local loop back instruction;
wherein the switching unit comprises: an establishment subunit (210) and a communication subunit, wherein,
the establishment subunit is configured to establish an internal transmission channel of the called UE in the device, and remove a calling CS channel established with the base station controller, and establish an internal transmission channel of the calling UE in the device, and establish a switching relation between the internal transmission channel of the called UE and the internal transmission channel of the calling UE, wherein the calling CS channel is established after the calling UE initiates a CS call and removed according to the local loop back instruction; and
the communication subunit is configured to enable the calling UE and the called UE to communicate in the local loop back mode according to the internal transmission channels established by the establishment subunit.

According to another aspect of the present invention, a system for processing CS domain service is provided, which includes the above-said device and a base station controller, wherein the base station controller is configured to determine that the calling user equipment, UE, and the called UE are served by the device, and send a local loop back instruction to the device.

As can be seen, through the technical solutions of the present invention, a base station controller determines that a calling UE and a called UE are served by a same base station or a same aggregation base station, and sends a local loop back instruction to the base station or aggregation base station, and the base station or aggregation base station switches the communication mode between the calling UE and the called UE to the local loop back mode according to the received local loop back instruction.

Compared with the prior art, in the solutions of the present invention, the communication mode between the calling UE and the called UE served by a same base station or a same aggregation base station is switched to the local loop back mode, so that the participation of an MGW is not required, thereby lowering the bandwidth requirements and shortening the transmission delay of service flows.

### BRIEF DESCRIPTION OF THE DRAWINGS

FIG. 1 is a schematic view of service flows in a data plane of a CS domain in the prior art;
FIG. 2 is a flow chart of a method according to a first embodiment of the present invention;
FIG. 3 is a flow chart of a method according to a second embodiment of the present invention
FIG. 4 is a schematic view of data flows before and after switching to the local loop back mode according to the second embodiment of the present invention;
FIG. 5 is a flow chart of implementing switching to the non-local loop back mode according to the second embodiment of the present invention;
FIG. 6 is a schematic view of data flows before and after switching to the non-local loop back mode according to the second embodiment of the present invention;
FIG. 7 is a flow chart of a method according to a third embodiment of the present invention;
FIG. 8 is a schematic view of data flows before and after switching to the local loop back mode according to the third embodiment of the present invention;
FIG. 9 is a flow chart of implementing re-switching to the local loop back mode according to the third embodiment of the present invention;
FIG. 10 is a schematic view of data flows before and after re-switching to the local loop back mode according to the third embodiment of the present invention;
FIG. 11 is a flow chart of implementing switching to the non-local loop back mode according to the third embodiment of the present invention;
FIG. 12 is a schematic view of data flows before and after switching to the non-local loop back mode according to the third embodiment of the present invention;
FIG. 13 is a schematic structural view of a system according to an embodiment of the present invention; and
FIG. 14 is a schematic structural view of a device according to an embodiment of the present invention.

### DETAILED DESCRIPTION OF THE EMBODIMENTS

In the present invention, a base station controller determines that a calling UE and a called UE are served by a same base station or a same aggregation base station, and sends a local loop back instruction to the base station or aggregation base station, and the base station or aggregation base station switches the communication mode between the calling UE and the called UE to the local loop back mode according to the received local loop back instruction.

In the following embodiments of the present invention, the solutions of the present invention are described by taking a NodeB defined by the 3GPP standard as an example of the base station, taking a HUB NodeB defined by the 3GPP standard as an example of the aggregation base station, and taking an RNC defined by the 3GPP standard as an example of the base station controller. In the embodiments of the present invention, the control plane always exists at lu and lub interfaces, and switching is merely performed for the data plane.

In order to make the objectives, technical solutions, and advantages of the present invention more comprehensible, the present invention is described in further detail below with reference to some exemplary embodiments and the accompanying drawings.

FIG. 2 is a flow chart of a method according to a first embodiment of the present invention. As shown in FIG. 2, the method includes the following steps.

In step 201, an RNC determines that a calling UE and a called UE are served by a same NodeB or a same HUB NodeB, and sends a local loop back instruction to the NodeB or HUB NodeB.

When the callingUE and the called UE are served by a same NodeB, before step 201, the method further includes the following process: The calling UE initiates a call and accesses a CN, and the CN sends a calling UE channel establishment instruction message to the RNC; the RNC establishes a calling UE channel with the CN and with a NodeB that serves the calling UE, and instructs the NodeB to establish a calling UE radio bearer with the callingUE; the CN sends a called UE channel establishment instruction message to the RNC. and the RNC establishes a called UE channel with the CN.

The RNC determines that the calling UE and the called UE are served by a same NodeB according to calling UE location information carried in the calling UE channel establishment instruction message received from the CN and called UE location information carried in the called UE channel establishment instruction message received from the CN. Then, the RNC instructs through an instruction message the NodeB to establish a called UE radio bearer with the called UE, specifies in the instruction message sent by the RNC to the NodeB that the calling UE and the called UE use the local loop back mode for communication, and notifies the HUB NodeB of a calling UE radio bearer corresponding to the called UE radio bearer.

When the calling UE and the called UE are served by different NodeBs but are served by a same HUB NodeB, before step 201, the method further includes: the calling UE initiates a call and accesses a CN, and the CN sends a calling UE channel establishment instruction message to the RNC; the RNC establishes a calling UE channel with the CN and with a NodeB that serves the calling UE, and instructs the NodeB to establish a calling UE radio bearer with the calling UE; the RNC instructs the HUB NodeB corresponding to the NodeB that serves the calling UE to establish a calling UE channel with the NodeB that serves the calling UE; the CN sends a called UE channel establishment instruction message to the RNC. and the RNC establishes a called UE channel with the CN, and instructs a NodeB that serves the called UE to establish a called UE radio bearer with the called UE.

The RNC determines that the calling UE and the called UE are served by a same HUB NodeB according to calling UE location information carried in the calling UE channel establishment instruction message received from the CN and called UE location information carried in the called UE channel establishment instruction message received from the CN. Then, the RNC instructs through an instruction message the HUB NodeB to establish a called UE channel with the NodeB that serves the called UE, specifies in the instruction message sent by the RNC to the HUB NodeB that the calling UE and the called UE use the local loop back mode for communication, and notifies the HUB NodeB of a calling UE channel corresponding to the called UE channel.

In step 202, the NodeB or HUB NodeB switches the communication mode between the calling UE and the called UE to the local loop back mode according to the received local loop back instruction.

When the calling UE and the called UE are served by a same NodeB, this step may be specifically implemented as follows: The NodeB establishes an internal transmission channel of the called UE in the NodeB; the NodeB removes a calling CS channel in a calling UE channel established with the RNC, and establishes an internal transmission channel of the calling UE in the NodeB; the NodeB establishes a switching relation between the internal transmission channel of the called UE and the internal transmission channel of the calling UE, that is, connects the internal transmission channel of the calling UE and the internal transmission channel of the called UE to form one channel, and enables the calling UE and the called UE to communicate in the local loop back mode.

When the calling UE and the called UE are served by different NodeBs but are served by a same HUB NodeB, this step may be specifically implemented as follows: The HUB NodeB establishes an internal transmission channel of the called UE in the HUB NodeB; the HUB NodeB removes a calling CS channel in a calling UE channel established with the RNC, and establishes an internal transmission channel of the calling UE in the HUB NodeB; the HUB NodeB establishes a switching relation between the internal transmission channel of the called UE and the internal transmission channel of the calling UE, that is, connects the internal transmission channel of the calling UE and the internal transmission channel of the called UE to form one channel, and enables the calling UE and the called UE to communicate in the local loop back mode.

As can be seen, through the technical solutions of the embodiment of the present invention, when UEs at two ends of the CS call are served by a same RNC, it is determined whether the two UEs are located within the service coverage of a same NodeB or a same HUB NodeB, and if one of the conditions is satisfied, the two UEs served by the same RNC are switched to a local switching mode, that is, the local loop back mode. If one of the UEs is moved later, the switching mode may also be reset.

The technical solutions of the present invention are described in further detail below through other embodiments.

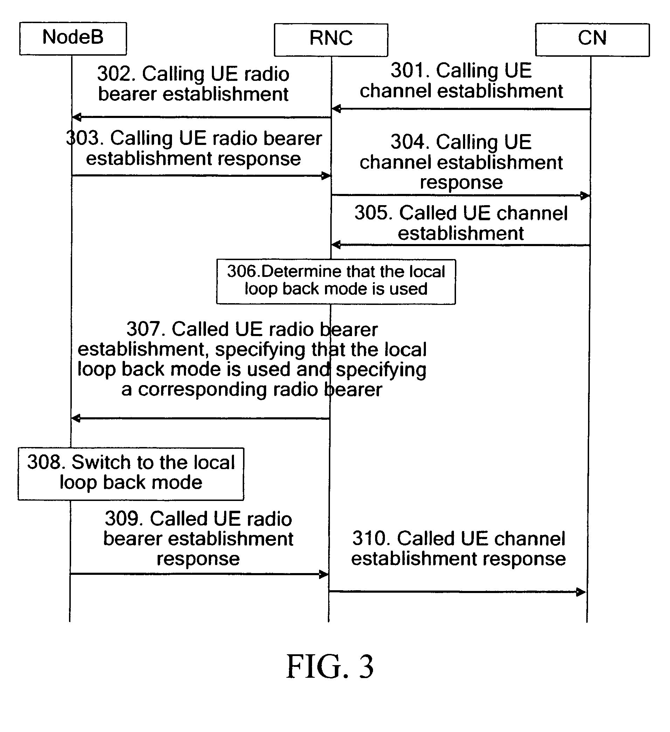

FIG. 3 is a flow chart of a method according to a second embodiment of the present invention. In this embodiment, a calling UE and a called UE are served by a same NodeB. The calling UE accesses a NodeB3 shown in FIG 1, and the called UE also accesses the NodeB3 shown in FIG. 1. An RNC determines that the calling UE and the called UE can implement local loop back, and when establishing a called UE radio bearer, the RNC specifies in a radio link establishment request sent to the NodeB3 that the calling UE and the called UE use the local loop back mode for communication. As shown in FIG. 3, the method includes the following steps.

In step 301, the calling UE initiates a CS call and accesses a CN, and the CN sends a calling UE channel establishment instruction message to the RNC.

In this step, the CN sends the calling UE channel establishment instruction message to the RNC; and a calling UE channel is established between the RNC and the CN, including a 3.4K signaling channel in the control plane and a CS channel in the data plane.

The calling UE channel establishment instruction message carries a calling UE ID, configured to identify location information of the calling UE, and the RNC receives and stores the location information of the calling UE.

In step 302. the RNC sends a calling UE radio bearer establishment instruction message to the NodeB.

In this step, the RNC sends the calling UE radio bearer establishment instruction message to the NodeB that serves the calling UE and the called UE, that is, the NodeB3 as described in this embodiment. After receiving the message, the NodeB establishes a calling UE channel with the RNC, including a 3.4K signaling channel in the control plane and a CS channel in the data plane, and establishes a calling UE radio bearer with the calling UE.

In step 303, the NodeB returns a calling UE radio bearer establishment response message to the RNC.

In step 304, the RNC returns a calling UE channel establishment response message to the CN.

In step 305, the CN sends a called UE channel establishment instruction message to the RNC.

In this step, the CN sends the called UE channel establishment instruction message to the RNC, and a called UE channel is established between the RNC and the CN, including a 3.4K signaling channel in the control plane and a CS channel in the data plane.

The called UE channel establishment instruction message carries a called UE ID, configured to identify location information of the called UE, and the RNC receives and stores the location information of the called UE.

In step 306, the RNC determines that the calling UE and the called UE can use the local loop back mode for communication.

In this step, the RNC determines that the calling UE and the called UE are served by a same NodeB according to the stored location information of the calling UE and the called UE, and thus determines that the calling UE and the called UE can use the local loop back mode for communication.

In steps 307 to 308, the RNC sends a called UE radio bearer establishment instruction message to the NodeB, and specifies in the message that the local loop back mode is used for communication and specifies the calling UE radio bearer corresponding to a called UE radio bearer; and the NodeB establishes the local loop back mode as the communication mode of the calling UE and the called UE.

In this step, the RNC sends the called UE radio bearer establishment instruction message to the NodeB, requesting the NodeB to establish a called UE radio bearer with the called UE. The NodeB establishes a 3.4K signaling channel to the RNC for the called UE, but does not establish any CS channel, and instead, establishes an internal transmission channel for the called UE. Then, the NodeB removes a calling UE CS channel between the NodeB and the RNC and establishes an internal transmission channel of the calling UE, and establishes a switching relation between the internal transmission channel of the calling UE and the internal transmission channel of the called UE, that is, connects the internal transmission channel of the calling UE and the internal transmission channel of the called UE to form one channel.

In step 309, the NodeB returns a called UE radio bearer establishment response message to the RNC.

In step 310, the RNC returns a called UE channel establishment response message to the CN.

After the above process, the calling UE and the called UE can communicate in the local loop back mode.

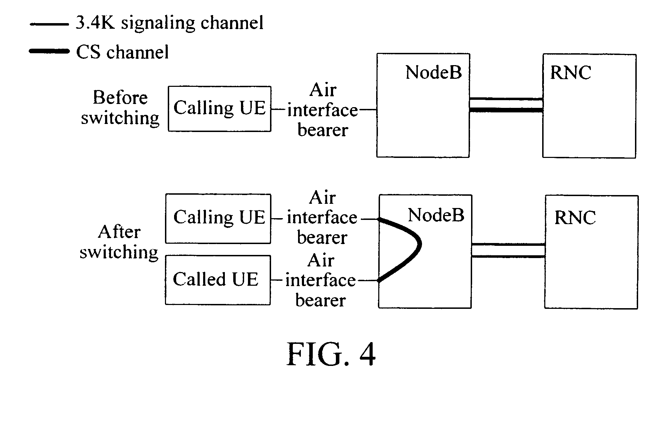

FIG. 4 is a schematic view of data flows before and after switching to the local loop back mode according to the second embodiment of the present invention. As shown in FIG. 4, a thin line represents a 3.4K signaling channel, and a thick line represents a CS channel. It can be seen that, the solutions of the present invention are merely directed to the data plane, so that before and after the switching, the 3.4K signaling channel does not change, but the CS channel changes after the switching, and service flows sent from the calling UE and the called UE are transmitted to the peer end through the NodeB, without requiring participation of an RNC or an MGW.

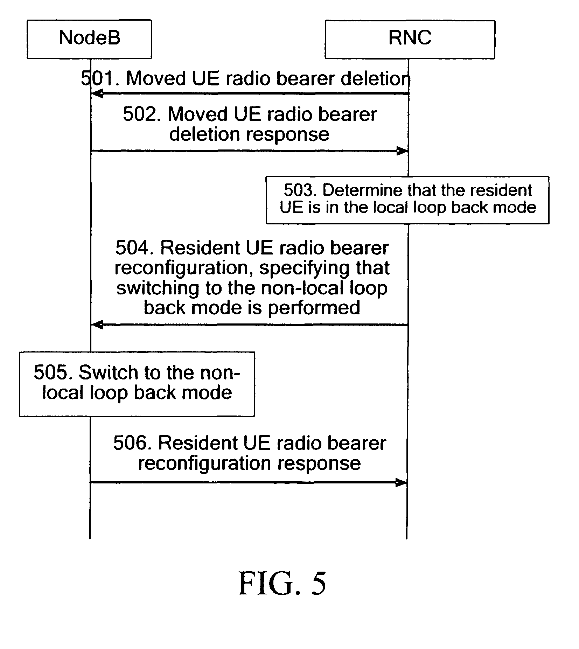

Based on the embodiment shown in FIG. 3, at a time when the calling UE or the called UE is moved out of the service coverage of the NodeB3 and enters the service coverage of a new NodeB, if the new NodeB and the NodeB3 are served by different HUB NodeBs, the RNC, while deleting an original radio link for the moved UE and establishing a new radio link, needs to send a radio link reconfiguration message to the NodeB3 to request the NodeB3 to establish a radio link bearer of a CS channel of the UE that is still resident in the service coverage of NodeB3 to an RNC channel, that is, switch the communication mode of the resident UE to the non-local loop back mode. FIG. 5 is a flow chart of implementing the switching to the non-local loop back mode according to the second embodiment of the present invention. As shown in FIG. 5, the process includes the following steps.

In steps 501 to 502, the RNC sends a moved UE radio bearer deletion message to the NodeB; and the NodeB deletes a radio bearer corresponding to the moved UE, and returns a moved UE radio bearer deletion response message to the RNC.

In steps 503 to 504, the RNC determines that the communication mode of the resident UE is the local loop back mode, sends a resident UE radio bearer reconfiguration message to the NodeB, and specifies that switching to the non-local loop back mode.

In step 505, the NodeB switches the communication mode of the resident UE from the local loop back mode to the non-local loop back mode, deletes the internal transmission channel, and establishes a CS channel between the resident UE and the RNC.

In step 506, the NodeB sends a resident UE radio bearer reconfiguration response message to the RNC.

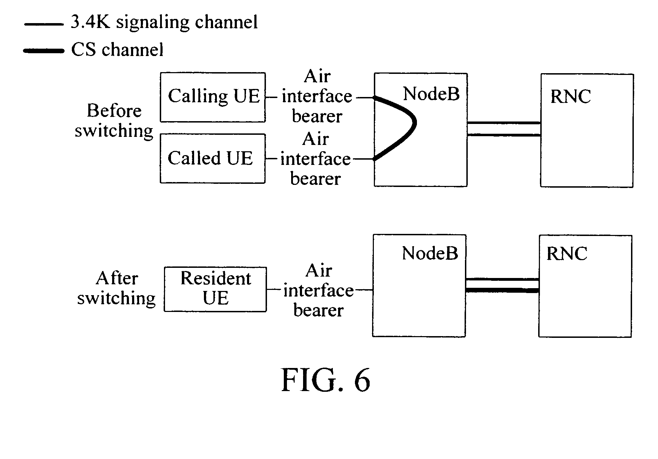

FIG. 6 is a schematic view of data flows before and after switching to the non-local loop back mode according to the second embodiment of the present invention. As shown in FIG. 6, a thin line represents a 3.4K signaling channel, and a thick line represents a CS channel. It can be seen that, after the switching, the resident UE communicates through the RNC according to the existing manner.

FIGs. 3 to 6 introduce a process for implementing the solutions of the present invention, when the calling UE and the called UE are served by a same NodeB. A process for implementing the solutions of the present invention when the calling UE and the called UE are served by different NodeBs but are served by a same HUB NodeB is described below through a third embodiment.

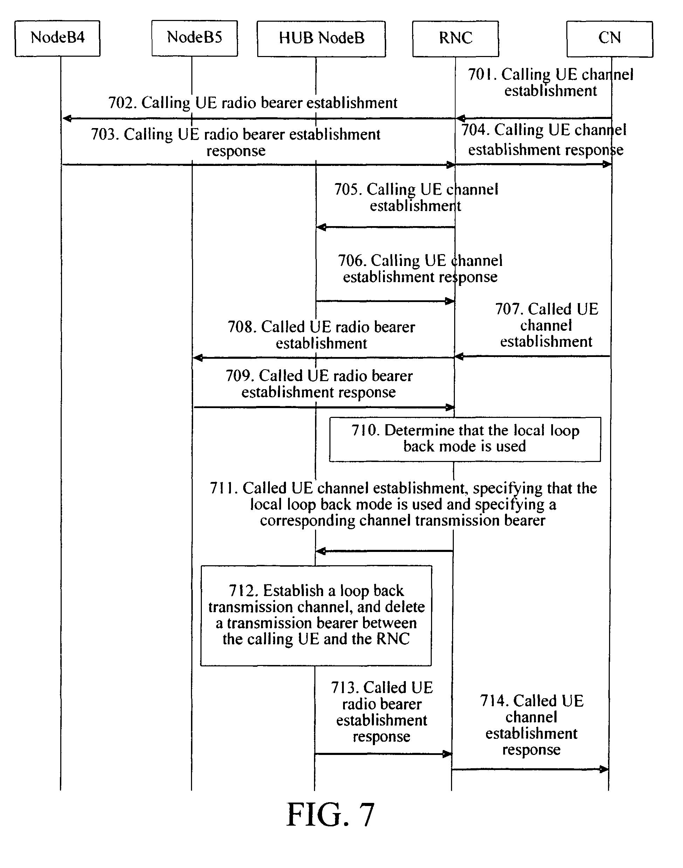

FIG. 7 is a flow chart of a method according to a third embodiment of the present invention. In this embodiment, a calling UE and a called UE are served by a same HUB NodeB. The calling UE accesses a NodeB4 shown in FIG. 1, and the called UE accesses a NodeB5 shown in FIG. 1. An RNC determines that the calling UE and the called UE can implement local loop back, and when establishing a called UE radio bearer, the RNC specifies in a transmission channel configuration message sent to the HUB NodeB that the calling UE and the called UE use the local loop back mode for communication. As shown in FIG. 7, the method includes the following steps.

In step 701, the calling UE initiates a CS call and accesses a CN, and the CN sends a calling UE channel establishment instruction message to the RNC.

In this step, the CN sends the calling UE channel establishment instruction message to the RNC; and a calling UE channel is established between the RNC and the CN, including a 3.4K signaling channel in the control plane and a CS channel in the data plane.

The calling UE channel establishment instruction message carries a calling UE ID, configured to identify location information of the calling UE, and the RNC receives and stores the location information of the calling UE.

In step 702, the RNC sends a calling UE radio bearer establishment instruction message to the NodeB4.

In this step, the RNC sends the calling UE radio bearer establishment instruction message to the NodeB that serves the calling UE, that is, the NodeB4 as described in this embodiment. After receiving the message, the NodeB4 establishes a calling UE radio bearer with the calling UE.

In step 703, the NodeB4 returns a calling UE radio bearer establishment response message to the RNC.

In step 704, the RNC returns a calling UE channel establishment response message to the CN.

In steps 705 to 706, the RNC sends a calling UE channel establishment instruction message to the HUB NodeB; and the HUB NodeB establishes a calling UE channel with the RNC and with the NodeB4, and returns a calling UE channel establishment response message to the RNC.

In step 707, the CN sends a called UE channel establishment instruction message to the RNC.

In this step, the CN sends the called UE channel establishment instruction message to the RNC, and a called UE channel is established between the RNC and the CN, including a 3.4K signaling channel in the control plane and a CS channel in the data plane.

The called UE channel establishment instruction message carries a called UE ID, configured to identify location information of the called UE, and the RNC receives and stores the location information of the called UE.

In step 708, the RNC sends a called UE radio bearer establishment instruction message to the NodeB5.

In step 709, the NodeB5 establishes a called UE radio bearer with the called UE, and returns a called UE radio bearer establishment response message to the RNC.

In step 710, the RNC determines that the calling UE and the called UE can use the local loop back mode.

In this step, the RNC determines that the calling UE and the called UE are served by a same HUB NodeB according to the pre-stored location information of the calling UE and the called UE, and thus determines that the calling UE and the called UE can use the local loop back mode for communication.

In step 711, the RNC sends a called UE channel establishment instruction message to the HUB NodeB, and specifies in the message that the local loop back mode is used for communication and specifies a calling UE transmission bearer corresponding to a called UE transmission bearer, that is, the CS channel.

In this step, the HUB NodeB establishes a called UE channel with the Node5 and establishes a 3.4K signaling channel between the HUB NodeB and the RNC for the called UE, but does not establish any CS channel between the HUB NodeB and the RNC.

In step 712, the HUB NodeB establishes a loop back transmission channel, and deletes a transmission bearer between the calling UE and the RNC.

In this step, the HUB NodeB establishes an internal transmission channel of the called UE, removes a calling UE CS channel between the HUB NodeB and the RNC and establishes an internal transmission channel of the calling UE, and establishes a switching relation between the internal transmission channel of the calling UE and the internal transmission channel of the called UE.

In step 713, the HUB NodeB returns a called UE channel establishment response message to the RNC.

In step 714, the RNC returns a called UE channel establishment response message to the CN.

After the above process, the calling UE and the called UE can communicate in the local loop back mode.

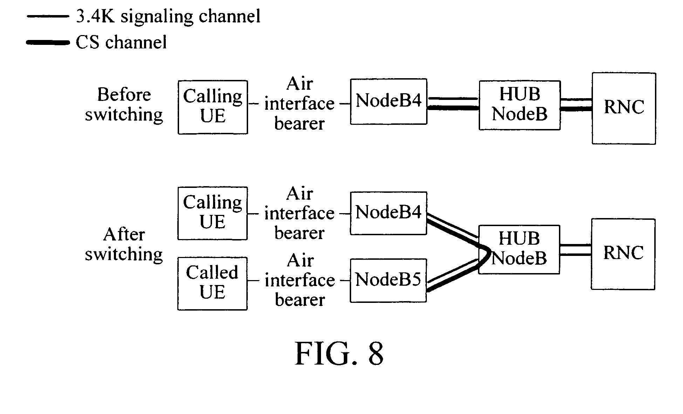

FIG. 8 is a schematic view of data flows before and after switching to the local loop back mode according to the third embodiment of the present invention. As shown in FIG. 8, a thin line represents a 3.4K signaling channel, and a thick line represents a CS channel. It can be seen that, after the switching, service flows sent from the calling UE and the called UE are transmitted to the peer end through the HUB NodeB, without requiring participation of an RNC or an MGW.

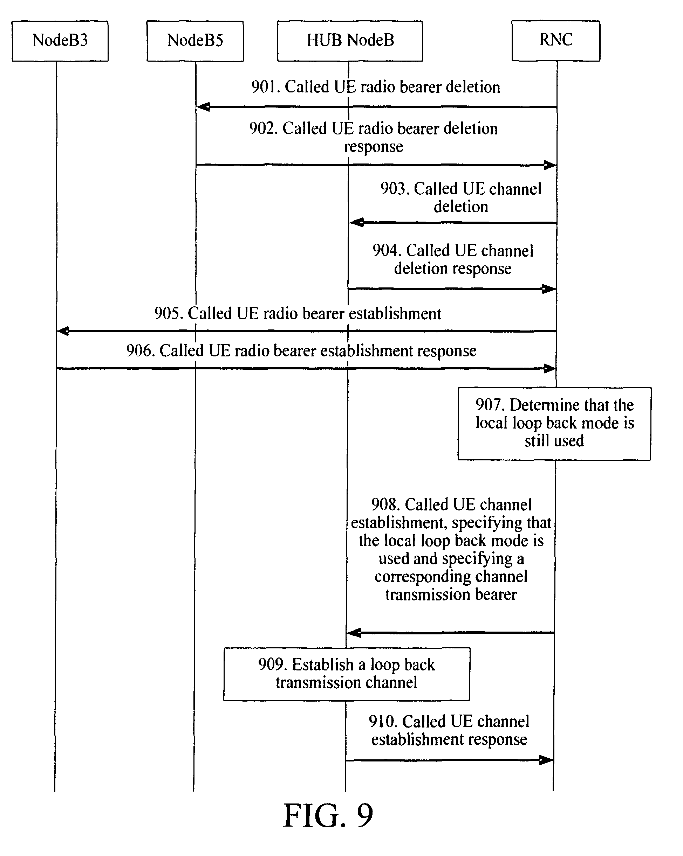

Based on the embodiment shown in FIG 8, it is assumed that at a time, the called UE is moved out of the service coverage of the NodeB5, and enters the service coverage of the NodeB3 shown in FIG. 1. Since the NodeB3 and the NodeB4 are still served by the same HUB NodeB, the RNC needs to reconfigure a local loop back relation while deleting an original UE channel for the called UE and establishing a new UE channel. FIG. 9 is a flow chart of implementing re-switching to the local loop back mode according to the third embodiment of the present invention. As shown in FIG. 9, the process includes the following steps.

In steps 901 to 902, the RNC sends a called UE radio bearer deletion message to the NodeB5; and the NodeB5 deletes a radio bearer corresponding to the called UE, and returns a called UE radio bearer deletion response message to the RNC.

In steps 903 to 904, the RNC sends a called UE channel deletion message to the HUB NodeB; and the HUB NodeB performs a corresponding operation, and returns a called UE channel deletion response message to the RNC.

Steps 905 to 910 are similar to steps 708 to 713 shown in FIG. 7, except that the step of deleting the transmission bearer between the calling UE and the RNC as shown in step 712 does not need to be performed in step 909. The remaining steps are substantially same as those shown in FIG. 7, so the details will not be described herein again.

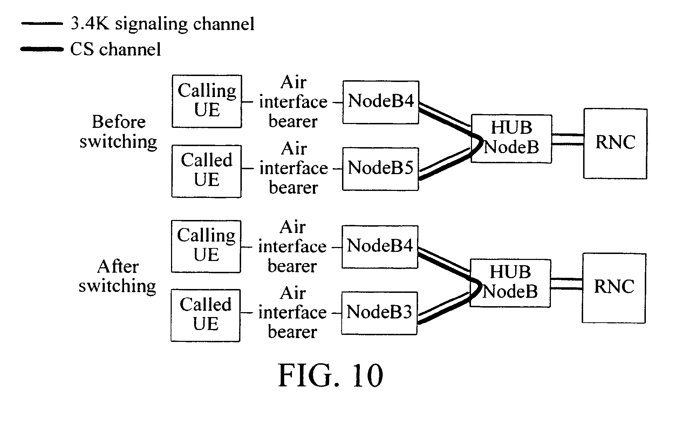

FIG. 10 is a schematic view of data flows before and after re-switching to the local loop back mode according to the third embodiment of the present invention. As shown in FIG. 10, a thin line represents a 3.4K signaling channel, and a thick line represents a CS channel. It can be seen that, the communication mode is the local loop back mode before and after the switching, and the difference lies in that the NodeB that serves the called UE is changed.

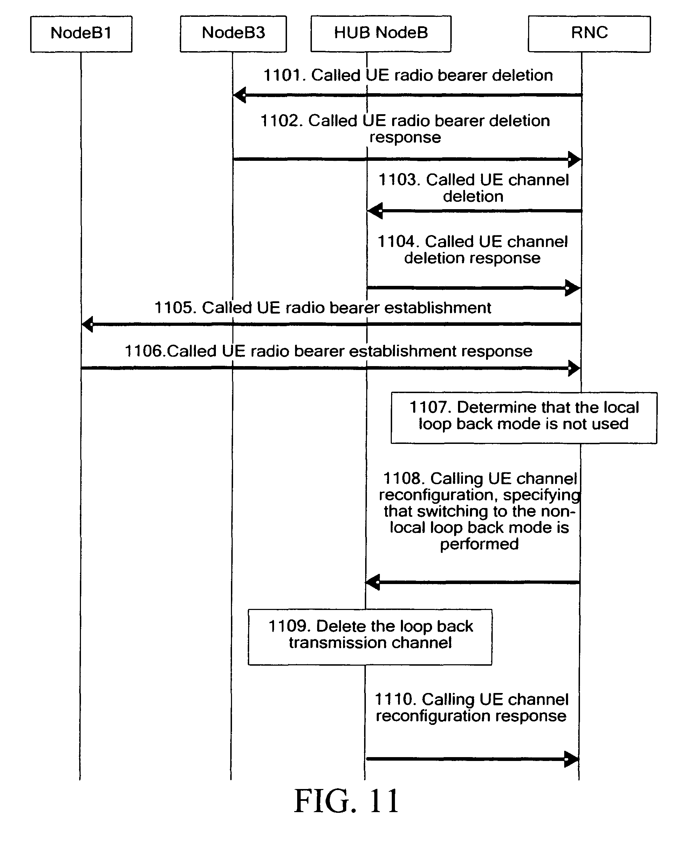

It is assumed that at a time, the called UE is continuously moved out of the service coverage of the NodeB3, and enters the service coverage of the NodeB1 shown in FIG 1. Since the NodeB1 and the NodeB4 are served by different HUB NodeBs, the RNC needs to switch the communication mode from the local loop back mode to the non-local loop back mode while deleting an original UE channel for the called UE and establishing a new UE channel. FIG. 11 is a flow chart of implementing switching to the non-local loop back mode according to the third embodiment of the present invention. As shown in FIG. 11, the process includes the following steps.

In steps 1101 to 1102, the RNC sends a called UE radio bearer deletion message to the NodeB3; and the NodeB3 deletes a radio bearer corresponding to the called UE, and returns a called UE radio bearer deletion response message to the RNC.

In steps 1103 to 1104, the RNC sends a called UE channel deletion message to the HUB NodeB; and the HUB NodeB performs a corresponding operation, and returns a called UE channel deletion response message to the RNC.

Insteps 1105 to 1106, the RNC sends a called UE radio bearer establishment instruction message to the NodeB1; and the NodeB1 establishes a called UE radio bearer with the called UE, and returns a called UE radio bearer establishment response message to the RNC.

In steps 1107 to 1108, the RNC determines that the calling UE and the called UE can no longer use the local loop back mode for communication, but the calling UE is still set as the local loop back mode, and thus sends a calling UE channel reconfiguration message to the HUB NodeB, and specifies that switching to the non-local loop back mode.

In step 1109, the HUB NodeB deletes the original internal transmission channel, and restores the CS channel between the calling UE and the RNC.

In step 1110, the HUB NodeB returns a calling UE channel reconfiguration response message to the RNC.

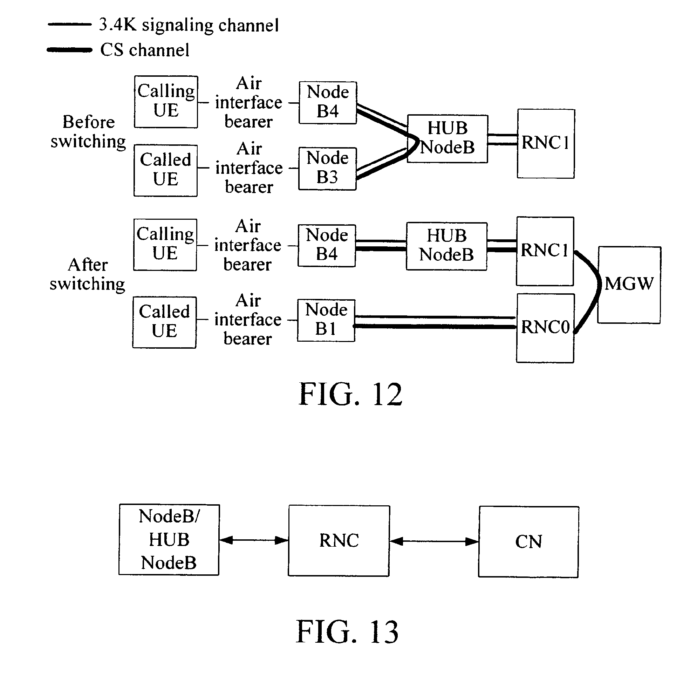

FIG. 12 is a schematic view of data flows before and after switching to the non-local loop back mode according to the third embodiment of the present invention. As shown in FIG. 12, a thin line represents a 3.4K signaling channel, and a thick line represents a CS channel. It can be seen that, since the NodeB1 and the NodeB4 are served by different HUB NodeBs, the communication mode between the calling UE and the called UE after the switch is the existing non-local loop back mode, and service flows between the calling UE and the called UE still need to be transmitted through an MGW.

It can be seen from the above introduction that, through the technical solutions of the embodiments of the present invention, the communication mode between the calling UE and the called UE that are served by a same NodeB or a same HUB NodeB may be switched to the local loop back mode, thereby lowering the bandwidth requirements and shortening the transmission delay of service flows.

It should be understood that, the above embodiments are described by way of examples only, but are not intended to limit the technical solutions of the present invention. For instance, the above embodiments are merely described through an example that the called UE is moved, but persons skilled in the art can easily understand from the above description that the process is similar when the calling UE is moved, so the details will not be described herein again.

It should be noted that, through the technical solutions of the embodiments of the present invention, adaptive adjustment needs to be performed for some specific implementations of the existing CS domain services. Since the CS domain services are generally voice services, the voice services are described as an example below.

Since the NodeB does not have a voice playing function, that is, the function of playing a ring back tone, the voice playing function is implemented by the CN in the prior art. That is to say, when the calling UE initially establishes a link, a CS voice channel is inevitably established to the CN. After the technical solutions of the embodiments of the present invention are used, the CN still plays the ring back tone for the calling UE, and after the NodeB or HUB NodeB switches the communication mode between the calling UE and the called UE to the local loop back mode, the established CS voice channel is released, so that normal communication is carried out in the local loop back mode.

In practical applications, it is generally required that adaptive multi-rates (AMRs) of two UEs capable of implementing local loop back match one another. Since the NodeB cannot directly obtain the AMRs of the UEs, in the embodiments of the present invention, after determining that the calling UE and the called UE are served by a same NodeB or a same HUB NodeB according to a message sent from the CN, the RNC needs to further determine whether AMRs of the calling UE and the called UE match one another, and sends the local loop back instruction to the NodeB or HUB NodeB if AMRs of the calling UE and the called UE match one another; if AMRs of the calling UE and the called UE do not match one another, the non-local loop back mode is adopted for communication.

In the above embodiments, the RNC may further carry voice packet encryption/decryption parameters in the calling UE radio bearer establishment instruction message or called UE radio bearer establishment instruction message sent to the NodeB that serves the calling UE or the called UE; during communication in the local loop back mode, the NodeB that serves the calling UE or the called UE parses an uplink Frame Protocol (FP) packet carrying CS voice, decrypts the uplink CS voice packet according to the voice packet encryption/decryption parameters, and converts the uplink CS voice packet into a downlink FP packet format; and for the downlink FP packet obtained after conversion, the converted downlink CS voice packet is encrypted according to the voice packet encryption/decryption parameters, and then sent out through an air interface.

Moreover, the technical solutions of the embodiments of the present invention can realize a soft handover function. For example, when the RNC determines that all links of the calling UE or the called UE are connected to a same NodeB, the RNC instructs the NodeB to execute a soft handover function; the NodeB selects from different soft handover links, and each time selects an uplink FP packet in a soft handover link having the best signal quality from more than one received soft handover link, and converts and sends the uplink FP packet: if the local loop back is implemented by the NodeB, the FP packet is processed according to the encryption/decryption manner described above and then transmitted; and if the local loop back is not implemented by the NodeB, the selected FP packet is sent to an lub interface according to an existing process. When the RNC determines that the soft handover occurs in a plurality of NodeBs, but the NodeBs are served by a same HUB NodeB, the RNC instructs each NodeB to operates in the same manner as that when the RNC determines that all links of the calling UE or the called UE are connected to a same NodeB, and instructs the HUB NodeB to complete the soft handover link processing between the NodeBs. The soft handover link operation specifically includes the following process: The HUB NodeB selects an uplink FP packet in a soft handover link having the best signal quality from the soft handover links that are connected to different NodeBs but belong to a same UE, performs CS voice packet decryption, converts the uplink FP packet into a downlink FP packet format, and then loops back the FP packet to a link of a NodeB for downlink processing. Since the soft handover technology belongs to the prior art, the details will not be described herein.

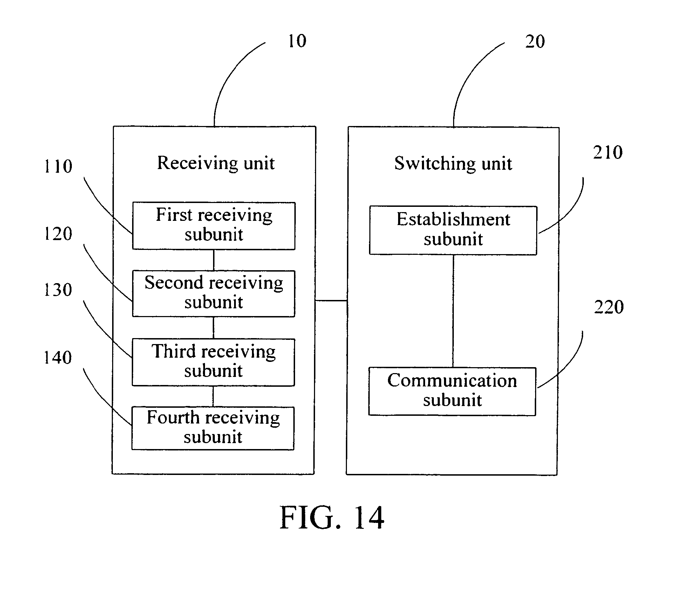

Accordingly, FIG. 13 is a schematic structural view of a system according to an embodiment of the present invention, and FIG. 14 is a schematic structural view of a device according to an embodiment of the present invention. In the two embodiments, description is also given by taking a NodeB defined by the 3GPP standard as an example of the base station, taking a HUB NodeB defined by the 3GPP standard as an example of the aggregation base station, and taking an RNC defined by the 3GPP standard as an example of the base station controller.

FIG. 13 is a schematic structural view of a system according to an embodiment of the present invention. As shown in FIG. 13, the system includes an RNC and a NodeB, or an RNC and a HUB NodeB.

The RNC is configured to determine that a calling UE and a called UE are served by a same NodeB or a same HUB NodeB, and send a local loop back instruction to the NodeB or HUB NodeB.

The NodeB or HUB NodeB is configured to switch the communication mode between the calling UE and the called UE to the local loop back mode according to the received local loop back instruction.

The system may further include a CN.

The CN is configured to send a calling UE channel establishment instruction message and a called UE channel establishment instruction message to the RNC when the calling UE initiates a call. The RNC determines that the calling UE and the called UE are served by a same NodeB or a same HUB NodeB according to calling UE location information carried in the calling UE channel establishment instruction message and called UE location information carried in the called UE channel establishment instruction message.

The RNC may be further configured to determine whether AMRs of the calling UE and the called UE match one another, and send the local loop back instruction to the NodeB or HUB NodeB, if AMRs of the calling UE and the called UE match one another.

FIG. 14 is a schematic structural view of a device according to an embodiment of the present invention. As shown in FIG. 14, the device includes a receiving unit 10 and a switching unit 20.

The receiving unit 10 is configured to receive a local loop back instruction from an RNC.

The switching unit 20 is configured to switch the communication mode between a calling UE and a called UE to the local loop back mode according to the local loop back instruction.

The receiving unit 10 further includes: a first receiving subunit 110 and a second receiving subunit 120.

The first receiving subunit 110 is configured to receive a calling UE radio bearer establishment instruction message from the RNC, and establish a calling UE radio bearer with the calling UE according to the instruction message.

The second receiving subunit 120 is configured to receive a called UE radio bearer establishment instruction message from the RNC, and establish a called UE radio bearer with the called UE according to the instruction message, where the instruction message carries the local loop back instruction, and calling UE radio bearer information corresponding to the called UE radio bearer.

Or, the first receiving subunit 110 is configured to receive a calling UE channel establishment instruction message from the RNC, and establish a calling UE channel with a NodeB that serves the calling UE according to the instruction message.

The second receiving subunit 120 is configured to receive a called UE channel establishment instruction message from the RNC, and establish a called UE channel with a NodeB that serves the called UE according to the instruction message, where the instruction message carries the local loop back instruction, and calling UE channel information corresponding to the called UE channel.

The switching unit 20 further includes: an establishment subunit 210 and a communication subunit 220.

The establishment subunit 210 is configured to establish an internal transmission channel of the called UE in the device, and remove a calling CS channel previously established with the RNC, and establish an internal transmission channel of the calling UE in the device, and establish a switching relation between the internal transmission channel of the called UE and the internal transmission channel of the calling UE.

The communication subunit 220 is configured to enable the calling UE and the called UE to communicate in the local loop back mode according to the internal transmission channels established by the establishment subunit 210.

When the device is a NodeB, the receiving unit 10 further includes: a third receiving subunit 130, configured to, when the calling UE or the called UE is moved out of the service coverage of the NodeB, delete a radio bearer corresponding to the moved UE according to an instruction received from the RNC, and instruct the switching unit 20 to switch the communication mode of the locally-resident UE to the non-local loop back mode; the establishment subunit 210 establishes a CS channel between the NodeB and the RNC; and the communication subunit 220 communicates in the non-local loop back mode.

When the device is a HUB NodeB, the receiving unit 10 further includes: a third receiving subunit 130 and a fourth receiving subunit 140. The third receiving subunit 130 is configured to, when the calling UE or the called UE is moved to the service coverage of a new NodeB, and the calling UE and the called UE are still served by the same HUB NodeB after the movement, instruct a NodeB corresponding to the moved UE to delete a radio bearer corresponding to the moved UE according to an instruction received from the RNC, and delete a CS channel with the NodeB corresponding to the moved UE, and receive a new local loop back instruction sent by the RNC; and the switching unit 20 reestablishes a local loop back communication mode between the calling UE and the called UE for communication. The fourth receiving subunit 140 is configured to, when the calling UE or the called UE is moved to the service coverage of a new NodeB, and the calling UE and the called UE are located within the service coverage of different HUB NodeBs after the movement, instruct a NodeB corresponding to the moved UE to delete a radio bearer corresponding to the moved UE according to an instruction received from the RNC, and delete a CS channel with the NodeB corresponding to the moved UE, and instruct the switching unit 20 to switch the communication mode of the locally-resident UE to the non-local loop back mode; the establishment subunit 210 establishes a CS channel between the NodeB corresponding to the resident UE and the RNC; and the communication subunit 220 communicates in the non-local loop back mode.

As for specific work flows of the embodiments of the system and the device shown in FIGs. 13 and 14, reference is made to the description in the part corresponding to the method, and the details will not be described herein again.

Based on the above description, by using the technical solutions of the embodiments of the present invention, the transmission bandwidth requirements for the lub and lu interfaces are lowered and the data transmission delay is shortened. In addition, the ideas of the embodiments of the present invention are equally applicable to Global System for Mobile Communication (GSM), Code Division Multiple Access (CDMA) or like scenarios.

Through the descriptions of the preceding embodiments, those skilled in the art may understand that the present invention may be implemented by hardware only or by software and a necessary universal hardware platform. Based on such understandings, the technical solution under the present invention may be embodied in the form of a software product. The software product may be stored in a nonvolatile storage medium, which can be a Compact Disk Read-Only Memory (CD-ROM), USB flash drive, or a removable hard drive. The software product includes a number of instructions that enable a computer device (personal computer, server, or network device) to execute the methods provided in the embodiments of the present invention.

Although the present invention has been described through several exemplary embodiments, the invention is not limited to such embodiments. Any modification, equivalent replacement, or improvement made without departing from the principle of the present invention should fall within the scope of the present invention as defined by the appended claims.

## Claims

1. A method for Circuit Switched, CS, domain service processing, comprising:
receiving (201) a local loop back instruction sent by a base station controller after the base station controller determines that a calling user equipment, UE, and a called UE are served by a same base station or a same aggregation base station;
switching (202) the communication mode between the calling UE and the called UE to the local loop back mode according to the local loop back instruction; **characterized in that** the switching the communication mode between the calling UE and the called UE to the local loop back mode according to the local loop back instruction comprises:
establishing, by the base station or the aggregation base station, an internal transmission channel of the called UE in the base station or the aggregation base station;
removing, by the base station or the aggregation base station, a calling CS channel in a calling UE channel established with the base station controller, and establishing an internal transmission channel of the calling UE in the base station or aggregation base station, wherein the calling CS channel in the calling UE channel is established after the calling UE initiates a CS call and removed according to the local loop back instruction; and
establishing, by the base station or aggregation base station, a switching relation between the internal transmission channel of the called UE and the internal transmission channel of the calling UE to enable the calling UE and the called UE to communicate in the local loop back mode.

2. The method according to claim 1, wherein after the switching the communication mode between the calling UE and the called UE to the local loop back mode, the method further comprises:
selecting, by the base station, after receiving an instruction from the base station controller for executing a soft handover function, an uplink Frame Protocol, FP, packet in a soft handover link having the best signal quality that is selected from more than one soft handover links, and converting and sending the uplink FP packet.

3. The method according to claim 1, wherein after the switching the communication mode between the calling UE and the called UE to the local loop back mode, the method further comprises:
receiving, by the aggregation base station and different base stations which serve the calling UE or the called UE, an instruction from the base station controller for executing a soft handover function;
selecting, by each of the different base stations, a soft handover link having the best signal quality from more than one soft handover links, and reporting the soft handover link having the best signal quality to the aggregation base station; and
selecting, by the aggregation base station, an uplink Frame Protocol, FP, packet in a soft handover link having the best signal quality selected from the soft handover links that are reported by different base stations and corresponding to the calling UE or the called UE, and converting and sending the uplink FP packet.

4. The method according to claim 1, wherein before the receiving, the method further comprises:
receiving, by the base station, voice packet encryption/decryption parameters sent by the base station controller;
during communication in the local loop back mode, parsing, by the base station, an uplink Frame Protocol, FP, packet carrying CS voice, decrypting the uplink FP packet according to the voice packet encryption/decryption parameters, and converting the uplink FP packet into a downlink FP packet; and
encrypting the downlink FP packet according to the voice packet encryption/decryption parameters, and sending the encrypted downlink FP packet.

5. A method for Circuit Switched, CS, domain service processing, comprising:
determining (201), by a base station controller, that a calling user equipment, UE, and a called UE are served by a same base station or a same aggregation base station; and
sending (201), by the base station controller, a local loop back instruction to the base station or aggregation base station, for switching the communication mode between the calling UE and the called UE to the local loop back mode; **characterised in that** the for switching the communication mode between the calling UE and the called UE to the local loop back mode comprises:
for establishing, by the base station or the aggregation base station, an internal transmission channel of the called UE in the base station or the aggregation base station;
for removing, by the base station or the aggregation base station, a calling CS channel in a calling UE channel established with the base station controller, and establishing an internal transmission channel of the calling UE in the base station or aggregation base station, wherein the calling CS channel in the calling UE channel is established after the calling UE initiates a CS call and removed according to the local loop back instruction; and
for establishing, by the base station or aggregation base station, a switching relation between the internal transmission channel of the called UE and the internal transmission channel of the calling UE to enable the calling UE and the called UE to communicate in the local loop back mode.

6. The method according to claim 5, wherein the determining, by the base station controller, that the calling UE and the called UE are served by a same base station or a same aggregation base station comprises:
receiving (301, 701) a calling UE channel establishment instruction message sent by a core network, CN, after receiving a CS call initiated by the calling UE, wherein the calling UE channel establishment instruction message carries calling UE location information;
receiving (305, 707) a called UE channel establishment instruction message sent by the CN, wherein the called UE channel establishment instruction message carries called UE location information; and
determining (306, 710) that the calling UE and the called UE are served by a same base station or a same aggregation base station according to the calling UE location information and the called UE location information.

7. The method according to claim 5, wherein the sending the local loop back instruction comprises:
instructing (307), by the base station controller through a first instruction message if the calling UE and the called UE are served by the base station, the base station to establish a called UE radio bearer with the called UE, specifying in the first instruction message sent by the base station controller to the base station that the calling UE and the called UE use the local loop back mode for communication, and notifying the base station of an already-established calling UE radio bearer corresponding to a called UE radio bearer; or
instructing (711), by the base station controller through a second instruction message if the calling UE and the called UE are served by the aggregation base station" the aggregation base station to establish a called UE channel with a base station that serves the called UE, specifying in the second instruction message sent by the base station controller to the aggregation base station that the calling UE and the called UE use the local loop back mode for communication, and notifying the aggregation base station of an already-established calling UE channel corresponding to a called UE channel.

8. The method according to claim 5, further comprising:
if the calling UE and the called UE are served by the base station, when one of the calling UE and the called UE is moved out of the service coverage of the base station, instructing (501), by the base station controller, the base station to delete a radio bearer established for the moved UE; and
instructing (504), by the base station controller, the base station to switch the communication mode of the other UE to the non-local loop back mode, and to establish a CS channel between the base station corresponding to the other UE and the base station controller;
or,
if the calling UE and the called UE are served by the aggregation base station, when the calling UE or the called UE is moved to the service coverage of a new base station, and the calling UE and the called UE are still served by the aggregation base station after the movement, instructing (901), by the base station controller, a base station that serves the moved UE before the movement to delete a radio bearer corresponding to the moved UE, and instructing (903) the aggregation base station to delete a CS channel with the base station that serves the moved UE before the movement;
sending (908), by the base station controller, another local loop back instruction to the aggregation base station, for the aggregation base station reconfiguring a local loop back relation between the calling UE and the called UE
or,
if the calling UE and the called UE are served by the aggregation base station, when one of the calling UE and the called UE is moved to the service coverage of a new base station, and the calling UE and the called UE are no longer both served by the aggregation base station after the movement, instructing (1101), by the base station controller, a base station that serves the moved UE before the movement to delete a radio bearer corresponding to the moved UE, and instructing (1103) the aggregation base station to delete a CS channel with the base station serves the moved UE before the movement; and
instructing (1108), by the base station controller, the aggregation base station to switch the communication mode of the other UE to the non-local loop back mode, and to establish a CS channel between the aggregation base station corresponding to the other UE and the base station controller.

9. A device for Circuit Switched, CS, domain service processing, comprising: a receiving unit (10) and a switching unit (20), wherein
the receiving unit (10) is configured to receive a local loop back instruction from a base station controller; and
the switching unit (20) is configured to switch the communication mode between a calling user equipment (UE) and a called UE to the local loop back mode according to the local loop back instruction, **characterized in that**
the switching unit comprises: an establishment subunit (210) and a communication subunit (220), wherein,
the establishment subunit (210) is configured to establish an internal transmission channel of the called UE in the device, and remove a calling CS channel established with the base station controller, and establish an internal transmission channel of the calling UE in the device, and establish a switching relation between the internal transmission channel of the called UE and the internal transmission channel of the calling UE, wherein the calling CS channel is established after the calling UE initiates a CS call and removed according to the local loop back instruction; and
the communication subunit (220) is configured to enable the calling UE and the called UE to communicate in the local loop back mode according to the internal transmission channels established by the establishment subunit.

10. The device according to claim 9, wherein the receiving unit comprises: a first receiving subunit (110) and a second receiving subunit (120), wherein
the first receiving subunit (110) is configured to receive a calling UE radio bearer establishment instruction message from the base station controller, and establish a calling UE radio bearer between the device and the calling UE according to the calling UE radio bearer establishment instruction message; and
the second receiving (120) subunit is configured to receive a called UE radio bearer establishment instruction message from the base station controller, and establish a called UE radio bearer between the device and the called UE according to the called UE radio bearer establishment instruction message; wherein the called UE radio bearer establishment instruction message carries the local loop back instruction, and calling UE radio bearer information corresponding to the called UE radio bearer;
or,
the first receiving subunit (110) is configured to receive a calling UE channel establishment instruction message from the base station controller, and establish a calling UE channel between the device and a base station that serves the calling UE according to the calling UE channel establishment instruction message; and
the second receiving subunit (120) is configured to receive a called UE channel establishment instruction message from the base station controller, and establish a called UE channel between the device and a base station that serves the called UE according to the called UE channel establishment instruction message; wherein the called UE channel establishment instruction message carries the local loop back instruction, and calling UE channel information corresponding to the called UE channel.

11. The device according to claim 10, wherein
the device is a base station; and
the receiving unit (10) further comprises: a third receiving subunit (130), configured to, when one of the calling UE and the called UE is moved out of the base station, delete a radio bearer corresponding to the moved UE according to an instruction received from the base station controller, and instruct the switching unit to switch the communication mode of the other UE to the non-local loop back mode.

12. The device according to claim 10, wherein
the device is an aggregation base station; and
the receiving unit (10) further comprises at least one of a third receiving subunit (130) and a fourth receiving subunit (140), wherein
the third receiving subunit (130) is configured to, when the calling UE or the called UE is moved to the service coverage of a new base station, and the calling UE and the called UE are still served by the aggregation base station after the movement, instruct a base station that serves the moved UE before the movement to delete a radio bearer corresponding to the moved UE according to an instruction received from the base station controller, and delete a CS channel with the base station that serves the moved UE before the movement, and receive a new local loop back instruction sent by the base station controller; and wherein the switching unit is adapted to reconfigure a local loop back relation between the calling UE and the called UE for communication; and
the fourth receiving subunit (140) is configured to, when one of the calling UE and the called UE is moved to the service coverage of a new base station, and the calling UE and the called UE are served by different aggregation base stations after the movement, instruct a base station that serves the moved UE before the movement to delete a radio bearer corresponding to the moved UE according to an instruction received from the base station controller, and delete a CS channel with the base station that serves the moved UE before the movement, and instruct the switching unit to switch the communication mode of the other UE to the non-local loop back mode.

13. A system for Circuit Switched, CS, domain service processing, comprising a device according to any one of claims 9 to 12and a base station controller, wherein the base station controller is configured to determine that the calling user equipment, UE, and the called UE are served by the device, and send a local loop back instruction to the device.

## Patentansprüche

1. Verfahren zum Verarbeiten von Diensten der leitungsvermittelten bzw. CS-Domäne, umfassend:
Empfangen (201) einer Lokal-Prüfschleifenanweisung, die durch eine Basisstationssteuerung gesendet wird, nachdem die Basisstationssteuerung bestimmt, dass ein anrufendes Benutzergerät bzw. UE und ein angerufenes UE von einer selben Basisstation oder einer selben Aggregations-Basisstation versorgt werden;
Umschalten (202) des Kommunikationsmodus zwischen dem anrufenden UE und dem angerufenen UE in den Lokal-Prüfschleifenmodus gemäß der Lokal-Prüfschleifenanweisung; **dadurch gekennzeichnet, dass**
das Umschalten des Kommunikationsmodus zwischen dem anrufenden UE und dem angerufenen UE in den Lokal-Prüfschleifenmodus gemäß der Lokal-Prüfschleifenanweisung Folgendes umfasst:
Herstellen eines internen Übertragungskanals des angerufenen UE in der Basisstation oder der Aggregations-Basisstation durch die Basisstation oder die Aggregations-Basisstation;
Entfernen eines anrufenden CS-Kanals in einem mit der Basisstationssteuerung hergestellten anrufenden UE-Kanal durch die Basisstation oder die Aggregations-Basisstation und Herstellen eines internen Übertragungskanals des anrufenden UE in der Basisstation oder Aggregations-Basisstation, wobei der anrufende CS-Kanal in dem anrufenden UE-Kanal gemäß der Lokal-Prüfschleifenanweisung hergestellt, nachdem das anrufende UE einen CS-Anruf einleitet, und entfernt wird; und
Herstellen einer Umschaltbeziehung durch die Basisstation oder Aggregations-Basisstation zwischen dem internen Übertragungskanal des angerufenen UE und dem internen Übertragungskanal des anrufenden UE, um es dem anrufenden UE und dem angerufenen UE zu ermöglichen, in dem Lokal-Prüfschleifenmodus zu kommunizieren.

2. Verfahren nach Anspruch 1, wobei das Verfahren nach dem Umschalten des Kommunikationsmodus zwischen dem anrufenden UE und dem angerufenen UE in den Lokal-Prüfschleifenmodus ferner Folgendes umfasst:
Auswählen eines Aufwärtsstrecken-Pakets des Frame Protocol, FP, durch die Basisstation nach dem Empfang einer Anweisung von der Basisstationssteuerung zum Ausführen einer Soft-Handover-Funktion in einer Soft-Handover-Strecke, die die beste Signalqualität aufweist, die aus mehr als einer Soft-Handover-Strecke ausgewählt wird, und Umsetzen und Senden des Aufwärtsstrecken-FP-Pakets.

3. Verfahren nach Anspruch 1, wobei das Verfahren nach dem Umschalten des Kommunikationsmodus zwischen dem anrufenden UE und dem angerufenen UE in den Lokal-Prüfschleifenmodus ferner Folgendes umfasst:
Empfangen einer Anweisung durch die Aggregations-Basisstation und verschiedene Basisstationen, die das anrufende UE oder das angerufene UE versorgen, von der Basisstationssteuerung zum Ausführen einer Soft-Handover-Funktion;
Auswählen einer Soft-Handover-Strecke mit der besten Signalqualität durch jede der verschiedenen Basisstationen aus mehr als einer Soft-Handover-Strecke und Melden der Soft-Handover-Strecke mit der besten Signalqualität an die Aggregations-Basisstation; und
Auswählen eines Aufwärtsstrecken-Pakets des Frame Protocol, FP, in einer Soft-Handover-Strecke mit der besten Signalqualität durch die Aggregations-Basisstation, die aus den Soft-Handover-Strecken ausgewählt wird, die von verschiedenen Basisstationen gemeldet werden und dem anrufenden UE oder dem angerufenen UE entsprechen, und Umsetzen und Senden des Aufwärtsstrecken-FP-Pakets.

4. Verfahren nach Anspruch 1, wobei das Verfahren vor dem Empfangen ferner Folgendes umfasst:
Empfangen von durch die Basisstationssteuerung gesendeten Sprachpaketverschlüsselungs-/-entschlüsselungsparametern durch die Basisstation;
Parsen eines Aufwärtsstrecken-Pakets des Frame Protocol, FP, das CS-Sprache fahrt, durch die Basisstation während der Kommunikation im Lokal-Prüfschleifenmodus, Entschlüsseln des Aufwärtsstrecken-FP-Pakets gemäß den Sprachpaketverschlüsselungs-/-entschlüsselungsparametern und Umsetzen des Aufwärtsstrecken-FP-Pakets in ein Abwärtsstrecken-FP-Paket; und
Verschlüsseln des Abwärtsstrecken-FP-Pakets gemäß den Sprachpaketverschlüsselungs-/-entschlüsselungsparametern und Senden des verschlüsselten Abwärtsstrecken-FP-Pakets.

5. Verfahren zum Verarbeiten von Diensten der leitungsvermittelten bzw. CS-Domäne, umfassend:
Bestimmen (201) durch eine Basisstationssteuerung, dass ein anrufendes Benutzergerät, UE, und ein angerufenes UE von einer selben Basisstation oder einer selben Aggregrations-Basisstation versorgt werden; und
Senden (201) einer Lokal-Prüfschleifenanweisung durch die Basisstationssteuerung zu der Basisstation oder Aggregations-Basisstation zum Umschalten des Kommunikationsmodus zwischen dem anrufenden UE und dem angerufenen UE in den Lokal-Prüfschleifenmodus; **dadurch gekennzeichnet, dass** das Umschalten des Kommunikationsmodus zwischen dem anrufenden UE und dem angerufenen UE in den Lokal-Prüfschleifenmodus Folgendes umfasst:
Herstellen eines internen Übertragungskanals des angerufenen UE in der Basisstation oder der Aggregations-Basisstation durch die Basisstation oder die Aggregations-Basisstation;
Entfernen eines anrufenden CS-Kanals in einem mit der Basisstationssteuerung hergestellten anrufenden UE-Kanal durch die Basisstation oder die Aggregations-Basisstation und Herstellen eines internen Übertragungskanals des anrufenden UE in der Basisstation oder Aggregations-Basisstation, wobei der anrufende CS-Kanal in dem anrufenden UE-Kanal gemäß der Lokal-Prüfschleifenanweisung hergestellt, nachdem das anrufende UE einen CS-Anruf einleitet, und entfernt wird; und
Herstellen einer Umschaltbeziehung durch die Basisstation oder Aggregations-Basisstation zwischen dem internen Übertragungskanal des angerufenen UE und dem internen Übertragungskanal des anrufenden UE, um es dem anrufenden UE und dem angerufenen UE zu ermöglichen, in dem Lokal-Prüfschleifenmodus zu kommunizieren.

6. Verfahren nach Anspruch 5, wobei das Bestimmen durch die Basisstationssteuerung, dass das anrufende UE und das angerufene UE von einer selben Basisstation oder einer selben Aggregations-Basisstation versorgt werden, Folgendes umfasst:
Empfangen (301, 701) einer durch ein Kernnetz, CN, gesendeten Anweisungsnachricht der Herstellung des anrufenden UE-Kanals nach dem Empfang eines durch das anrufende UE eingeleiteten CS-Anrufs, wobei die Anweisungsnachricht der Herstellung des anrufenden UE-Kanals Ortsinformationen des anrufenden UE führt;
Empfangen (305, 707) einer durch das CN gesendeten Anweisungsnachricht der Herstellung des angerufenen UE-Kanals, wobei die Anweisungsnachricht der Herstellung des angerufenen UE-Kanals Ortsinformationen des angerufenen UE führt; und
Bestimmen (306, 710), dass das anrufende UE und das angerufene UE von einer selben Basisstation oder einer selben Aggregations-Basisstation versorgt werden, gemäß den Ortsinformationen des anrufenden UE und den Ortsinformationen des angerufenen UE.

7. Verfahren nach Anspruch 5, wobei das Senden der Lokal-Prüfschleifenanweisung Folgendes umfasst:
Anweisen (307) der Basisstation durch die Basisstationssteuerung durch eine erste Anweisungsnachricht, wenn das anrufende UE und das angerufene UE von der Basisstation versorgt werden, um einen Funkträger des angerufenen UE mit dem angerufenen UE herzustellen, Spezifizieren in der durch die Basisstationssteuerung zu der Basisstation gesendeten ersten Anweisungsnachricht, dass das anrufende UE und das angerufene UE den Lokal-Prüfschleifenmodus zur Kommunikation verwenden, und Benachrichtigen der Basisstation über einen bereits hergestellten Funkträger des anrufenden UE, der einem Funkträger des angerufenen UE entspricht;
oder
Anweisen (711) der Aggregations-Basisstation durch die Basisstationssteuerung durch eine zweite Anweisungsnachricht, wenn das anrufende UE und das angerufene UE von der Aggregations-Basisstation versorgt werden, um einen angerufenen UE-Kanal mit einer Basisstation, die das angerufene UE versorgt, herzustellen, Spezifizieren in der durch die Basisstationssteuerung zu der Aggregations-Basisstation gesendeten zweiten Anweisungsnachricht, dass das anrufende UE und das angerufene UE den Lokal-Prüfschleifenmodus zur Kommunikation verwenden, und Benachrichtigen der Aggregations-Basisstation über einen bereits hergestellten anrufenden UE-Kanal, der einem angerufenen UE-Kanal entspricht.

8. Verfahren nach Anspruch 5, ferner umfassend:
wenn das anrufende UE und das angerufene UE von der Basisstation versorgt werden und wenn das anrufende UE oder das angerufene UE aus dem Versorgungsgebiet der Basisstation herausbewegt wird, Anweisen (501) der Basisstation durch die Basisstationssteuerung, einen für das bewegte UE hergestellten Funkträger zu löschen; und
Anweisen (504) der Basisstation durch die Basisstationssteuerung, den Kommunikationsmodus des anderen UE in den Nicht-Lokal-Prüfschleifenmodus umzuschalten und einen CS-Kanal zwischen der Basisstation, die dem anderen UE entspricht, und der Basisstationssteuerung herzustellen;
oder
wenn das anrufende UE und das angerufene UE von der Aggregations-Basisstation versorgt werden und wenn das anrufende UE oder das angerufene UE in das Versorgungsgebiet einer neuen Basisstation bewegt wird und das anrufende UE und das angerufene UE nach der Bewegung immer noch von der Aggregations-Basisstation versorgt werden, Anweisen (901) einer Basisstation, die das bewegte UE versorgt, durch die Basisstationssteuerung vor der Bewegung, einen dem bewegten UE entsprechenden Funkträger zu löschen, und Anweisen (903) der Aggregations-Basisstation, einen CS-Kanal mit der Basisstation, die das bewegte UE versorgt, zu löschen, vor der Bewegung;
Senden (908) einer weiteren Lokal-Prüfschleifenanweisung durch die Basisstationssteuerung zu der Aggregation-Basisstation, damit die Aggregations-Basisstation eine Lokal-Prüfschleifenrelation zwischen dem anrufenden UE und dem angerufenen UE umkonfiguriert;
oder
wenn das anrufende UE und das angerufene UE von der Aggregrations-Basisstation versorgt werden und wenn das anrufende UE oder das angerufene UE in das Versorgungsgebiet einer neuen Basisstation bewegt wird und das anrufende UE und das angerufene UE nach der Bewegung nicht mehr beide von der Aggregations-Basisstation versorgt werden, Anweisen (1101) einer Basisstation, die das bewegte UE versorgt, durch die Basisstationssteuerung vor der Bewegung, einen dem bewegten UE entsprechenden Funkträger zu löschen, und Anweisen (1103) der Aggregations-Basisstation, einen CS-Kanal mit der Basisstation, die das bewegte UE versorgt, zu löschen, vor der Bewegung; und
Anweisen (1108) der Aggregations-Basisstation durch die Basisstationssteuerung, den Kommunikationsmodus des anderen UE in den Nicht-Lokal-Prüfschleifenmodus umzuschalten und einen CS-Kanal zwischen der dem anderen UE entsprechenden Aggregations-Basisstation und der Basisstationssteuerung herzustellen.

9. Einrichtung zur Verarbeitung von Diensten der leitungsvermittelten bzw. CS-Domäne, die eine Empfangseinheit (10) und eine Umschalteinheit (20) umfasst, wobei
die Empfangseinheit (10) dafür ausgelegt ist, eine Lokal-Prüfschleifenanweisung von einer Basisstationssteuerung zu empfangen; und
die Schalteinheit (20) dafür ausgelegt ist, den Kommunikationsmodus zwischen einem anrufenden Benutzergerät bzw. UE und einem angerufenen UE gemäß der Lokal-Prüfschleifenanweisung in den Lokal-Prüfschleifenmodus umzuschalten, **dadurch gekennzeichnet, dass**
die Umschalteinheit eine Herstellungs-Subeinheit (210) und eine Kommunikations-Subeinheit (220) umfasst, wobei
die Herstellungs-Subeinheit (210) dafür ausgelegt ist, einen internen Übertragungskanal des angerufenen UE in der Einrichtung herzustellen und einen mit der Basisstationssteuerung hergestellten anrufenden CS-Kanal zu entfernen und einen internen Übertragungskanal des anrufenden UE in der Einrichtung herzustellen und eine Umschaltbeziehung zwischen dem internen Übertragungskanal des angerufenen UE und dem internen Übertragungskanal des anrufenden UE herzustellen, wobei der anrufende CS-Kanal gemäß der Lokal-Prüfschleifenanweisung hergestellt, nachdem das anrufende UE einen CS-Anruf einleitet, und entfernt wird; und
die Kommunikations-Subeinheit (220) dafür ausgelegt ist, es dem anrufenden UE und dem angerufenen UE zu ermöglichen gemäß den durch die Herstellungs-Subeinheit hergestellten internen Übertragungskanälen in dem Lokal-Prüfschleifenmodus zu kommunizieren.

10. Einrichtung nach Anspruch 9, wobei die Empfangseinheit eine erste Empfangs-Subeinheit (110) und eine zweite Empfangs-Subeinheit (120) umfasst, wobei die erste Empfangs-Subeinheit (110) dafür ausgelegt ist, eine Anweisungsnachricht der Herstellung des Funkträgers des anrufenden UE von der Basisstationssteuerung zu empfangen und gemäß der Anweisungsnachricht der Herstellung des Funkträgers des anrufenden UE einen Funkträger des anrufenden UE zwischen der Einrichtung und dem anrufenden UE herzustellen; und
die zweite Empfangs-Subeinheit (120) dafür ausgelegt ist, eine Anweisungsnachricht der Herstellung des Funkträgers des angerufenen UE von der Basisstationssteuerung zu empfangen und gemäß der Anweisungsnachricht der Herstellung des Funkträgers des angerufenen UE einen Funkträger des angerufenen UE zwischen der Einrichtung und dem angerufenen UE herzustellen; wobei die Anweisungsnachricht der Herstellung des Funkträgers des angerufenen UE die Lokal-Prüfschleifenanweisung und dem Funkträger des angerufenen UE entsprechende Funkträgerinformationen des anrufenden UE führt;
oder
die erste Empfangs-Subeinheit (110) dafür ausgelegt ist, eine Anweisungsnachricht der Herstellung des Funkträgers des anrufenden UE-Kanals von der Basisstationssteuerung zu empfangen und gemäß der Anweisungsnachricht der Herstellung des anrufenden UE-Kanals einen anrufenden UE-Kanal zwischen der Einrichtung und einer Basisstation, die das anrufende UE versorgt, herzustellen; und
die zweite Empfangs-Subeinheit (120) dafür ausgelegt ist, eine Anweisungsnachricht der Herstellung eines angerufenen UE-Kanals von der Basisstationssteuerung zu empfangen und gemäß der Anweisungsnachricht der Herstellung des angerufenen UE-Kanals einen angerufenen UE-Kanal zwischen der Einrichtung und einer Basisstation, die das angerufene UE versorgt, herzustellen; wobei die Anweisungsnachricht der Herstellung des angerufenen UE-Kanals die Lokal-Prüfschleifenanweisung und dem angerufenen UE-Kanal entsprechende Informationen des anrufenden UE-Kanals führt.

11. Einrichtung nach Anspruch 10, wobei
die Einrichtung eine Basisstation ist; und
die Empfangseinheit (10) ferner Folgendes umfasst: eine dritte Empfangs-Subeinheit (130), die dafür ausgelegt ist, wenn das anrufende UE oder das angerufene UE aus der Basisstation herausbewegt wird, einen dem bewegten UE entsprechenden Funkträger gemäß einer von der Basisstationssteuerung empfangenen Anweisung zu löschen und die Umschalteinheit anzuweisen, den Kommunikationsmodus des anderen UE in den Nicht-Lokal-Prüfschleifenmodus umzuschalten.

12. Einrichtung nach Anspruch 10, wobei
die Einrichtung eine Aggregations-Basisstation ist; und
die Empfangseinheit (10) ferner eine dritte Empfangs-Subeinheit (130) und/oder eine vierte Empfangs-Subeinheit (140) umfasst, wobei
die dritte Empfangs-Subeinheit (130) dafür ausgelegt ist, wenn das anrufende UE oder das angerufene UE in das Versorgungsgebiet einer neuen Basisstation bewegt wird und das anrufende UE und das angerufene UE nach der Bewegung immer noch von der Aggregations-Basisstation versorgt werden, eine Basisstation, die das bewegte UE versorgt, vor der Bewegung einen dem bewegten UE entsprechenden Funkträger gemäß einer von der Basisstationssteuerung empfangenen Anweisung zu löschen und einen CS-Kanal mit der Basisstation, die das bewegte UE versorgt, vor der Bewegung zu löschen und eine durch die Basisstationssteuerung gesendete neue Lokal-Prüfschleifenanweisung zu empfangen; und wobei die Umschalteinheit dafür ausgelegt ist, eine Lokal-Prüfschleifenrelation zwischen dem anrufenden UE und dem angerufenen UE zur Kommunikation umzukonfigurieren; und
die vierte Empfangs-Subeinheit (140) dafür ausgelegt ist, wenn das anrufende UE oder das angerufene UE in das Versorgungsgebiet einer neuen Basisstation bewegt wird und das anrufende UE und das angerufene UE nach der Bewegung von verschiedenen Aggregations-Basisstationen versorgt werden, eine Basisstation, die das bewegte UE versorgt, anzuweisen, vor der Bewegung einen dem bewegten UE entsprechenden Funkträger gemäß einer von der Basisstationssteuerung empfangenen Anweisung zu löschen und einen CS-Kanal mit der Basisstation, die das bewegte UE versorgt, vor der Bewegung zu löschen und die Umschalteinheit anzuweisen, den Kommunikationsmodus des anderen UE in den Nicht-Lokal-Prüfschleifenmodus umzuschalten.

13. System zum Verarbeiten von Diensten der leitungsvermittelten bzw. CS-Domäne, das eine Einrichtung nach einem der Ansprüche 9 bis 12 und eine Basisstationssteuerung umfasst, wobei die Basisstationssteuerung dafür ausgelegt ist, zu bestimmen, dass das anrufende Benutzergerät bzw. UE und das angerufene UE von der Einrichtung versorgt werden, und eine Lokal-Prüfschleifenanweisung zu der Einrichtung zu senden.

## Revendications

1. Procédé de traitement de service dans le domaine à commutation de circuits, CS, comprenant :
la réception (201) d'un ordre de bouclage local envoyé par un contrôleur de station de base après que le contrôleur de station de base détermine qu'un équipement utilisateur, UE, appelant, et un UE appelé sont desservis par la même station de base ou une même station de base d'agrégation ;
la commutation (202) du mode de communication entre l'UE appelant et l'UE appelé sur le mode de bouclage local en fonction de l'ordre de bouclage local ; **caractérisé en ce que**
la commutation du mode de communication entre l'UE appelant et l'UE appelé sur le mode de bouclage local en fonction de l'ordre de bouclage local comprend :
l'établissement, par la station de base ou la station de base d'agrégation, d'un canal de transmission interne de l'UE appelé dans la station de base ou la station de base d'agrégation ;
la suppression, par la station de base ou la station de base d'agrégation, d'un canal CS appelant dans un canal d'UE appelant établi avec le contrôleur de station de base, et l'établissement d'un canal de transmission interne de l'UE appelant dans la station de base ou la station de base d'agrégation, le canal CS appelant dans le canal UE appelant étant établi après que l'UE appelant lance un appel CS et supprimé en fonction de l'ordre de bouclage local ; et
l'établissement, par la station de base ou la station de base d'agrégation, d'une relation de commutation entre le canal de transmission interne de l'UE appelé et le canal de transmission interne de l'UE appelant pour permettre à l'UE appelant et à l'UE appelé de communiquer dans le mode de bouclage local.

2. Procédé selon la revendication 1, comprenant en outre après la commutation du mode de communication entre l'UE appelant et l'UE appelé sur le mode de bouclage local :
la sélection, par la station de base, après la réception d'un ordre depuis le contrôleur de station de base d'exécuter une fonction de transfert temporaire, d'un paquet de Protocole Frame, FP, de liaison montante dans une liaison de transfert temporaire ayant la meilleure qualité de signal qui est sélectionnée parmi plus d'une liaison de transfert temporaire, et la conversion et l'envoi du paquet FP de liaison montante.

3. Procédé selon la revendication 1, comprenant en outre après la commutation du mode de communication entre l'UE appelant et l'UE appelé sur le mode de bouclage local :
la réception, par la station de base d'agrégation et différentes stations de base qui desservent l'UE appelant ou l'UE appelé, d'un ordre depuis le contrôleur de station de base d'exécuter une fonction de transfert temporaire ;
la sélection, par chacune des différentes stations de base, d'une liaison de transfert temporaire ayant la meilleure qualité de signal parmi plus d'une liaison de transfert temporaire, et la signalisation de la liaison de transfert temporaire qui a la meilleure qualité de signal à la station de base d'agrégation ; et
la sélection, par la station de base d'agrégation, d'un paquet de Protocole Frame, FP, de liaison montante, dans une liaison de transfert temporaire ayant la meilleure qualité de signal sélectionnée parmi les liaisons de transfert temporaire qui sont signalées par différentes stations de base et correspondant à l'UE appelant et à l'UE appelé, et la conversion et l'envoi du paquet FP de liaison montante.

4. Procédé selon la revendication 1, comprenant en outre, avant la réception :
la réception, par la station de base, de paramètres de cryptage/décryptage de paquets vocaux envoyés par le contrôleur de station de base ;
durant la communication dans le mode de bouclage local, l'analyse syntaxique, par la station de base, d'un paquet de Protocole Frame, FP, de liaison montante portant des informations vocales CS, le décryptage du paquet FP de liaison montante en fonction des paramètres de cryptage/décryptage de paquets vocaux, et la conversion du paquet FP de liaison montante en un paquet FP de liaison descendante ; et
le cryptage du paquet FP de liaison descendante en fonction des paramètres de cryptage/décryptage de paquets vocaux, et l'envoi du paquet FP de liaison descendante crypté.

5. Procédé de traitement de service dans le domaine à commutation de circuits, CS, comprenant :
la détermination (201), par un contrôleur de station de base, qu'un équipement utilisateur, UE, appelant, et un UE appelé sont desservis par une même station de base ou une même station de base d'agrégation ; et
l'envoi (201), par le contrôleur de station de base, d'un ordre de bouclage local à la station de base ou la station de base d'agrégation, pour commuter le mode de communication entre l'UE appelant et l'UE appelé sur le mode de bouclage local ;
**caractérisé en ce que**
la commutation du mode de communication entre l'UE appelant et l'UE appelé sur le mode de bouclage local comprend :
l'établissement, par la station de base ou la station de base d'agrégation, d'un canal de transmission interne de l'UE appelé dans la station de base ou la station de base d'agrégation ;
la suppression, par la station de base ou la station de base d'agrégation, d'un canal CS appelant dans un canal d'UE appelant établi avec le contrôleur de station de base, et l'établissement d'un canal de transmission interne de l'UE appelant dans la station de base ou la station de base d'agrégation, le canal CS appelant dans le canal UE appelant étant établi après que l'UE appelant lance un appel CS et supprimé en fonction de l'ordre de bouclage local ; et
l'établissement, par la station de base ou la station de base d'agrégation, d'une relation de commutation entre le canal de transmission interne de l'UE appelé et le canal de transmission interne de l'UE appelant pour permettre à l'UE appelant et l'UE appelé de communiquer dans le mode de bouclage local.

6. Procédé selon la revendication 5, dans lequel la détermination, par le contrôleur de station de base, que l'UE appelant et l'UE appelé sont desservis par une même station de base ou une même station de base d'agrégation comprend :
la réception (301, 701), d'un message d'ordre d'établissement de canal d'UE appelant envoyé par un réseau coeur, CN, après la réception d'un appel CS lancé par l'UE appelant, le message d'ordre d'établissement de canal d'UE appelant portant des informations d'emplacement de l'UE appelant ;
la réception (305, 707) d'un message d'ordre d'établissement de canal d'UE appelé envoyé par le CN, le message d'ordre d'établissement de canal d'UE appelé portant des informations d'emplacement de l'UE appelé ; et
la détermination (306, 710) que l'UE appelant et l'UE appelé sont desservis par une même station de base ou une même station de base d'agrégation en fonction des informations d'emplacement de l'UE appelant et des informations d'emplacement de l'UE appelé.

7. Procédé selon la revendication 5, dans lequel l'envoi de l'ordre de bouclage local comprend :
l'ordre (307), par le contrôleur de station de base par le biais d'un premier message d'ordre si l'UE appelant et l'UE appelé sont desservis par la station de base, à la station de base d'établir un support radio d'UE appelé avec l'UE appelé, la spécification dans le premier message d'ordre envoyé par le contrôleur de station de base à la station de base que l'UE appelant et l'UE appelé utilisent le mode de bouclage local pour communiquer, et la notification à la station de base d'un support radio d'UE appelant déjà établi correspondant à un support radio d'UE appelé ; ou
l'ordre (711), par le contrôleur de station de base par le biais d'un second message d'ordre si l'UE appelant et l'UE appelé sont desservis par la station de base d'agrégation, à la station de base d'agrégation d'établir un canal UE appelé avec une station de base qui dessert l'UE appelé, la spécification dans le second message d'ordre envoyé par le contrôleur de station de base à la station de base d'agrégation que l'UE appelant et l'UE appelé utilisent le mode de bouclage local pour communiquer, et la notification à la station de base d'agrégation d'un canal d'UE appelant déjà établi correspondant à un canal d'UE appelé.

8. Procédé selon la revendication 5, comprenant en outre :
si l'UE appelant et l'UE appelé sont desservis par la station de base, quand l'un de l'UE appelant et de l'UE appelé est déplacé hors de la zone de couverture de la station de base, l'ordre (501), par le contrôleur de station de base, à la station de base de supprimer un support radio établi pour l'UE déplacé ; et
l'ordre, (504), par le contrôleur de station de base, à la station de base de commuter le mode de communication de l'autre UE sur le mode de bouclage local, et d'établir un canal CS entre la station de base correspondant à l'autre UE et le contrôleur de station de base ;
ou,
si l'UE appelant et l'UE appelé sont desservis par la station de base d'agrégation, quand l'UE appelant ou l'UE est déplacé jusque dans la zone de couverture d'une nouvelle station de base, et si l'UE appelant et l'UE appelé sont toujours desservis par la station de base d'agrégation après le déplacement, l'ordre (901), par le contrôleur de station de base, à une station de base qui dessert l'UE déplacé avant le déplacement de supprimer un support radio correspondant à l'UE déplacé, et l'ordre (903) à la station de base d'agrégation de supprimer un canal CS avec la station de base qui dessert l'UE déplacé avant le déplacement ;
l'envoi (908), par le contrôleur de station de base, d'un autre ordre de bouclage local à la station de base d'agrégation, pour que la station de base d'agrégation reconfigure une relation de bouclage local entre l'UE appelant et l'UE appelé ;
ou,
si l'UE appelant et l'UE appelé sont desservis par la station de base d'agrégation, quand l'un de l'UE appelant et de l'UE est déplacé jusque dans la zone de couverture d'une nouvelle station de base, et si l'UE appelant et l'UE appelé ne sont plus desservis par la station de base d'agrégation après le déplacement, l'ordre (1101), par le contrôleur de station de base, à une station de base qui dessert l'UE déplacé avant le déplacement de supprimer un support radio correspondant à l'UE déplacé, et l'ordre (1103) à la station de base d'agrégation de supprimer un canal CS avec la station de base qui dessert l'UE déplacé avant le déplacement ; et
l'ordre (1108), par le contrôleur de station de base, à la station de base d'agrégation de commuter le mode de communication de l'autre UE sur le mode de bouclage non local, et d'établir un canal CS entre la station de base d'agrégation correspondant à l'autre UE et le contrôleur de station de base.

9. Dispositif de traitement de service dans le domaine à commutation de circuits, CS, comprenant : une unité de réception (10) et une unité de commutation (20),
l'unité de réception (10) étant configurée pour recevoir un ordre de bouclage local envoyé par un contrôleur de station de base ; et
l'unité de commutation (20) étant configurée pour commuter le mode de communication entre un Equipement utilisateur (UE) appelant et un UE appelé sur le mode de bouclage local en fonction de l'ordre de bouclage local ; **caractérisé en ce que**
l'unité de commutation comprend : une sous-unité d'établissement (210) et une sous-unité de communication (220),
la sous-unité d'établissement (210) étant configurée pour établir un canal de transmission interne de l'UE appelé dans le dispositif, et supprimer un canal CS appelant établi avec le contrôleur de station de base, et établir un canal de transmission interne de l'UE appelant dans le dispositif, et établir une relation de commutation entre le canal de transmission interne de l'UE appelé et le canal de transmission interne de l'UE appelant, le canal CS appelant étant établi après que l'UE appelant lance un appel CS et supprimé en fonction de l'ordre de bouclage local ; et
la sous-unité de communication (220) étant configurée pour permettre à l'UE appelant et à l'UE appelé de communiquer dans le mode de bouclage local en fonction des canaux de transmission internes établis par la sous-unité d'établissement.

10. Dispositif selon la revendication 9, dans lequel l'unité de réception comprend : une première sous-unité de réception (110) et une seconde sous-unité de réception (120), dans lequel
la première sous-unité de réception (110) est configurée pour recevoir un message d'ordre d'établissement de support radio d'UE appelant depuis le contrôleur de station de base, et établir un support radio d'UE appelant entre le dispositif et l'UE appelant en fonction du message d'ordre d'établissement de support radio d'UE appelant ; et
la seconde sous-unité de réception (120) est configurée pour recevoir un message d'ordre d'établissement de support radio d'UE appelé envoyé par le contrôleur de station de base, et établir un support radio d'UE appelé entre le dispositif et l'UE appelé en fonction du message d'ordre d'établissement de support radio d'UE appelé ; le message d'ordre d'établissement de support radio d'UE appelé portant l'ordre de bouclage local, et les informations de support radio de l'UE appelant correspondant au support radio de l'UE appelé ;
ou,
la première sous-unité de réception (110) est configurée pour recevoir un message d'ordre d'établissement de canal d'UE appelant depuis le contrôleur de station de base, et établir un canal d'UE appelant entre le dispositif et une station de base qui dessert l'UE appelant en fonction du message d'ordre d'établissement de canal d'UE appelant ; et
la seconde sous-unité de réception (120) est configurée pour recevoir un message d'ordre d'établissement de canal d'UE appelé envoyé par le contrôleur de station de base, et établir un canal d'UE appelé entre le dispositif et une station de base qui dessert l'UE appelé en fonction du message d'ordre d'établissement de canal d'UE appelé ; le message d'ordre d'établissement de canal d'UE appelé portant l'ordre de bouclage local, et les informations de canal d'UE appelant correspondant au canal de l'UE appelé.

11. Dispositif selon la revendication 10, dans lequel
le dispositif est une station de base ; et
l'unité de réception (10) comprend en outre : une troisième sous-unité de réception (130), configurée pour, quand l'un de l'UE appelant et de l'UE appelé est déplacé hors de la station de base, supprimer un support radio correspondant à l'UE déplacé en fonction d'un ordre reçu depuis le contrôleur de station de base, et instruire l'unité de commutation de commuter le mode de communication de l'autre UE sur le mode de bouclage non local.

12. Dispositif selon la revendication 10, dans lequel
le dispositif est une station de base d'agrégation ; et
l'unité de réception (10) comprend en outre au moins l'une d'une troisième sous-unité de réception (130) et d'une quatrième sous-unité de réception (140), dans lequel la troisième sous-unité de réception (130) est configuré pour, quand l'UE appelant ou l'UE appelé est déplacé jusque dans la zone de couverture d'une nouvelle station de base, et quand l'UE appelant et l'UE appelé sont toujours desservis par la station de base d'agrégation après le déplacement, instruire une station de base qui dessert l'UE déplacé avant le déplacement de supprimer un support radio correspondant à l'UE déplacé en fonction d'un ordre reçu depuis le contrôleur de station de base, et supprimer un canal CS avec la station de base qui dessert l'UE déplacé avant le déplacement, et recevoir un nouvel ordre de bouclage local envoyé par le contrôleur de station de base, et dans lequel l'unité de commutation est adaptée pour reconfigurer une relation de bouclage local entre l'UE appelant et l'UE appelé en vue de leur communication ; et
la quatrième sous-unité de réception (140) est configurée pour, quand l'un de l'UE appelant et de l'UE appelé est déplacé jusque dans la zone de couverture d'une nouvelle station de base, et quand l'UE appelant et l'UE appelé sont desservis par différentes stations de base d'agrégation après le déplacement, instruire une station de base qui dessert l'UE déplacé avant le déplacement de supprimer un support radio correspondant à l'UE déplacé en fonction d'un ordre reçu depuis le contrôleur de station de base, et supprimer un canal CS avec la station de base qui dessert l'UE déplacé avant le déplacement, et instruire l'unité de commutation de commuter le mode de communication de l'autre UE sur le mode de bouclage non local.

13. Système de traitement de service dans le domaine à commutation de circuits, CS, comprenant un dispositif selon l'une quelconque des revendications 9 à 12 et un contrôleur de station de base, dans lequel le contrôleur de station de base est configuré pour déterminer que l'équipement utilisateur, UE, appelant, et l'UE appelé, sont desservis par le dispositif, et envoyer un ordre de bouclage local au dispositif.
